# EUROPÄISCHE PATENTSCHRIFT

(11) **EP 1 367 189 B1**
(45) Veröffentlichungstag und Bekanntmachung des Hinweises auf die Patenterteilung: **20.02.2008**
(21) Anmeldenummer: 03009304.1
(22) Anmeldetag: 24.04.2003
(51) Int. Cl.: E04B 1/78

(54) **Verfahren zur Herstellung eines porösen Bauelements**
Method of manufacturing a porous structural element
Procédé de fabrication d'un élément de construction poreux

(30) Priorität: 27.05.2002 DE 10223488
(43) Veröffentlichungstag der Anmeldung: 03.12.2003
(73) Patentinhaber: Knauf Perlite GmbH, 44147 Dortmund (DE)
(72) Erfinder: Koslowski, Thomas, Dr.-Ing., 52072 Aachen (DE); Martin, Kai, 44141 Dortmund (DE); Schwiebacher, Werner, 50823 Köln (DE)
(74) Vertreter: Berkenbrink, Kai-Oliver

(56) Entgegenhaltungen:
- EP-A- 0 673 733
- DE-A- 19 839 295
- DE-C- 19 723 426
- US-A- 3 015 626
- US-A- 3 095 347
- US-A- 3 590 111
- US-A- 4 447 380
- "Allgemeine bauaufsichtliche Zulassung Z-23.11-1299 "Mineralische Wärmedämmplatte Hebel Multipor 100/L" 25. Juli 2000 (2000-07-25) , DEUTSCHES INSTUTUT FÜR BAUTECHNIK , BERLIN XP002255664 * Seite 3, Abschnitt 1.1, 2.1.4; Seite 4, Abschnitt 2.1.6, 2.1.7 *
- "Prospektmaterial GREISEL-Mineralplatte" Januar 2001 (2001-01) , F.X. GREISEL GMBH , D-91555 FEUCHTWANGEN XP002255665 * Tabellen *
- "HEBEL Porenbeton Handbuch" August 2001 (2001-08) , FELS-WERKE GMBH , GOSLAR XP002255666 * Abschnitte 2.2.1 und 2.2.2 *

## Beschreibung

Die Erfindung betrifft ein Verfahren zur Herstellung eines porösen Bauelementes.

Unter den Begriff "Bauelement" werden alle Arten von Formteilen subsumiert, die im Bauwesen Anwendung finden, beispielsweise Vollsteine, Lochsteine, Hohlblocksteine, Verblender, Platten, Säulen etc. Diese Bauelemente können auch in Kombination mit anderen Formteilen Anwendung finden, so dass das Bauelement Bestandteil eines Sandwichelementes oder einer Verbundplatte sein kann.

Für zahlreiche Anwendungen von Bauelementen ist es notwendig, die Bauelemente einer bestimmten Oberfläche, an die sie angelegt werden sollen, anzupassen. Beispielsweise müssen Bauelemente, soweit sie als Verblender Anwendung finden, der Oberfläche des Gebäudes, an dem sie angebracht werden sollen, angepasst werden. Soweit Bauelemente beispielsweise zur Erstellung von sogenannten Sandwichelementen oder Verbundsystemen verwendet werden sollen, müssen sie den benachbarten Lagen des Sandwichelementes beziehungsweise des Verbundsystemes angepasst werden.

Da Bauelemente werksseitig in Standardgrößen hergestellt werden, müssen die Bauelemente bauseitig an die Oberfläche, an die sie angelegt oder mit der sie verbunden werden sollen, angepasst werden. Dazu müssen "harte" Bauelemente, wie beispielsweise Kalksandsteine oder Gasbetonsteine, in die passende Form gesägt werden. "Weiche" Bauelemente, wie beispielsweise Mineralwolleerzeugnisse, werden mit Schneidvorrichtungen, beispielsweise Messern, in die passende Form geschnitten.

Dieses Zurechtsägen beziehungsweise Zurechtschneiden ist aufwendig. Darüber hinaus fällt Verschnitt an, der bauseitig zu entsorgen ist.

US 3,095,347 beschreibt eine Dämmplatte auf Basis einer expandierte Perlite, Fasern, Wasserglas, Bentonit, Stärke und Wasser aufweisenden Mischung.

Der Erfindung liegt die Aufgabe zugrunde, ein Verfahren zur Herstellung eines porösen Bauelementes anzubieten, dessen Oberfläche einfach strukturiert werden kann.

Diese Aufgabe löst die Erfindung durch das Verfahren nach Anspruch 1.

Das durch das erfindungsgemäße Verfahren hergestellte Bauelement zeichnet sich dadurch aus, dass es an einer mit Druck beaufschlagten Stelle derart nachgibt, dass diese Stelle nach Druckentlastung die durch die Druckbeanspruchung hervorgerufene Deformation beibehält. Das Bauelement weist somit die Eigenschaften eines irreversibel verformbaren Körpers auf.

Die (makroskopische) Gesamtstruktur des Bauelementes bleibt bei der Druckbeanspruchung erhalten. Es "zerspringt" oder "zerplatzt" nicht. Allein die (mikroskopisch) druckbeaufschlagte Stelle wird irreversibel verformt.

Das Bauelement kann somit werksseitig in einer vorgegebenen Größe hergestellt werden. Bauseitig kann es dann mittels entsprechender Druckwerkzeuge in die gewünschte Form gedrückt werden.

Dabei kann insbesondere vorgesehen sein, dass das Bauelement eine derartige Festigkeit aufweist, dass es erst ab einer Druckbeaufschlagung über einem bestimmten Schwellenwert irreversibel verformbar ist. Das Bauelement kann dadurch erst dann mittels Druckbeaufschlagung verformt werden, wenn der Druck den Schwellenwert übersteigt. Bis zu diesem Schwellenwert ist das Bauelement im wesentlichen formstabil, es zeigt also keine irreversiblen Verformungen. Dadurch kann das Bauelement auch als Konstruktionselement Anwendung finden, das bestimmte Festigkeitswerte aufweisen muss, beispielsweise als Element für eine Deckenkonstruktion.

Aufgrund seiner Porosität weist das Bauelement gleichzeitig gute Wärmedämmeigenschaften auf.

Aus dem Stand der Technik sind beispielsweise Kalksandsteine, Gasbetonsteine oder Mineralfasererzeugnisse als poröse Bauelemente bekannt.

Kalksandsteine erfüllen die Kriterien einer leichten Herstellung und guten Druckfestigkeit, weisen jedoch aufgrund ihrer hohen Dichte (Rohdichte nach DIN 106: 600 bis 2.200 kg/m³) eine schlechte Wärmedämmung auf. Darüber hinaus weisen Bauelemente aus Kalksandstein aufgrund ihrer hohen Dichte häufig auch ein hohes Gewicht auf, so dass sie für viele Anwendungen, bei denen das Gewicht des Bauelementes möglichst gering sein soll, nicht in Frage kommen. Kalksandsteine splittern oder platzen unter Druckbelastung.

Dieses Verhalten zeigen auch Gasbetonsteine. Diese sind in Rohdichteklassen zwischen 400 und 800 kg/m³ eingeteilt. Gasbetonsteine mit geringer Rohdichte weisen zwar günstigere Wärmedämmeigenschaften als Kalksandsteine auf, ihre Druckfestigkeit ist jedoch deutlich schlechter als die von Kalksandsteinen. Darüber hinaus ist das Herstellungsverfahren sehr viel aufwendiger als bei Kalksandsteinen.

Bauelemente aus Mineralwolleerzeugnissen, wie beispielsweise Mineralwolleplatten, weisen aufgrund ihrer geringen Dichte, die in der Regel zwischen 20 und 200 kg/m³ liegt, gute Wärmedämmeigenschaften auf. Sie sind jedoch kompliziert herzustellen, weisen eine vergleichsweise geringe Festigkeit auf und sind aufgrund der zum Binden der Mineralfasern verwendeten organischen Bindemittel, insbesondere Harzen, brennbar. Sie verformen sich unter Druckbelastung reversibel.

Ein Herstellungsverfahren soll nachfolgend beispielhaft näher erläutert werden.

Zunächst wird ein Bindemittel hergestellt, das Kieselsol und/oder Wasserglas enthält.

Das Bindemittel kann weitere Substanzen, insbesondere organische Substanzen enthalten. Diese weiteren organischen Substanzen können beispielsweise Acrylate und/oder organische Dispersionen (zum Beispiel Vinylacetat, Acrylsäureester und eine Polyurethan-Dispersion) sein.

Das Bindemittel enthält Verdicker (zum Beispiel Stärke und/oder Methylzellulose) und Hydrophobierungsmittel (zum Beispiel Metallseifen und/oder Silikone).

Es kann vorgesehen sein, die Komponenten des Bindemittels so aufeinander abzustimmen, dass das Bindemittel eine gelartige Konsistenz aufweist.

Das Bindemittel wird mit einem Leichtzuschlag vermischt.

Der mit dem Bindemittel vermischte Leichtzuschlag wird in eine Form gegeben und zu einem Rohling verpresst. Danach lässt man das Bindemittel-Leichtzuschlag-Gemisch zu einem Formkörper aushärten.

Der ausgehärtete Formkörper kann nunmehr in beliebige gewünschte Formate, beispielsweise Quader, geschnitten werden.

In einem Trockner wird der Formkörper auf eine Restfeuchte zwischen 5 und 20 Gewichts-Prozent zum fertigen Bauelement getrocknet.

Die makroskopische Struktur des Bauelementes wird bestimmt von in einer Bindemittelmatrix eingebettetem Leichtzuschlag.

Für das vorgenannte Verfahren gilt folgendes:

Der Leichtzuschlag ist expandierte Perlite, und kann beispielsweise eine Schüttdichte zwischen 25 und 100 kg/m³ aufweisen, also beispielsweise auch eine Schüttdichte zwischen 30 und 55 kg/m³, zwischen 35 und 50 kg/m³ oder zwischen 38 und 46 kg/m³.

Der Leichtzuschlag kann beispielsweise in einer Körnung unter 6 mm vorliegen. Weiterhin kann vorgesehen sein, dass der Leichtzuschlag keinen Feinkornanteil (Körnung kleiner 0,5 mm) aufweist. Die Körnung kann beispielsweise zwischen 0 und 6 mm liegen, also auch beispielsweise zwischen 0,5 und 6 mm, zwischen 0,5 und 4 mm, zwischen 0,5 und 3 mm, zwischen 1 und 3 mm, zwischen 0 und 3 mm oder zwischen 0 und 1,5 mm.

Eine beispielhafte Rezeptur für das beschriebene Verfahren sieht beispielsweise wie folgt aus (Angaben in Gewichts-Prozent):

| | |
|---|---|
| Wasser | 25-40 |
| Perlite (Körnung 0,5-3mm) | 45-60 |
| Kieselsol | 5-15 |
| Hydrophobierungsmittel | 0,1-1 |
| Verdicker | 2-5 |

Die nach dem anmeldungsgemäßen Verfahren hergestellten Bauelemente können die folgenden Merkmale aufweisen:

Sie weisen eine geringe Trocken-Rohdichte auf, die nach einer Ausführungsform zwischen 50 und 400 kg/m³ liegen kann, also beispielsweise auch zwischen 75 und 200 kg/m³ oder zwischen 90 und 140 kg/m³.

Aufgrund der geringen Wärmeleitfähigkeit der Bauelemente, die beispielsweise unter 0,08 W/m·K liegen kann, also beispielsweise auch unter 0,06 W/m·K oder unter 0,05 W/m·K, weisen die Bauelemente gute Wärmedämmeigenschaften auf.

Die Druckfestigkeit der Bauelemente liegt beispielsweise über 0,04 N/mm², also beispielsweise auch über 0,08 N/mm², über 0,1 N/mm² oder über 0,12 N/mm². Dies bedeutet, dass die Bauelemente erst ab einer äußeren Druckbeanspruchung, die einen der vorgenannten Schwellenwerte übersteigt, (irreversibel) verformbar sind.

Die vorgenannte Druckfestigkeit kann beispielsweise wie folgt bestimmt werden:

Untersucht wird ein Bauelement in Form eines Probewürfels von 100mm x 100mm x 100mm Kantenlänge. Der Probewürfel wird von einer Seite mittels eines quadratischen Druckstempels, der mit einer Kantenlänge von mindestens 100mm x 100mm auf der betreffenden Seite aufliegt, einer Druckbeanspruchung unterworfen. Sobald der durch den Druckstempel ausgeübte Druck den Schwellenwert der Druckfestigkeit des Probewürfels übersteigt, wird der Probewürfel durch den Druckstempel irreversibel verformt.

Wie oben bereits ausgeführt, wird das Bauelement nur an der druckbeanspruchten Stelle irreversibel verformt, während die Grundstruktur des Bauelementes im wesentlichen erhalten bleibt; das Bauelement zerspringt durch die Druckbeanspruchung also (zunächst) nicht, beziehungsweise erfährt keine Abplatzungen und zeigt keine vom Ort der Druckbeanspruchung ausgehenden Risse.

Die Verformung des Bauelementes lässt sich selbstverständlich nicht beliebig weit fortsetzen, ohne dass das Bauelement in seiner Grundstruktur nicht letztendliche doch beschädigt würde, also beispielsweise vom Ort der Druckbeanspruchung ausgehende Risse zeigt.

Das Bauelement kann durch die Druckbeanspruchung an der druckbeanspruchten Stelle bis zu einem bestimmten Wert irreversibel verformt (gestaucht) werden, ohne in seiner Grundstruktur zerstört (beschädigt) zu werden. Dabei kann das Bauelement beispielsweise bis zu 30 % gestaucht werden, also beispielsweise auch bis zu 20 %, bis zu 15 % oder bis zu 12 %, ohne in seiner Grundstruktur zerstört zu werden.

Die nachfolgende Grafik stellt rein beispielhaft den Verlauf der Spannung in Abhängigkeit der Stauchung eines Bauelementes dar, der an einem Bauelement gemäß der zuvor genannten Versuchsdurchführung gemessen worden ist:

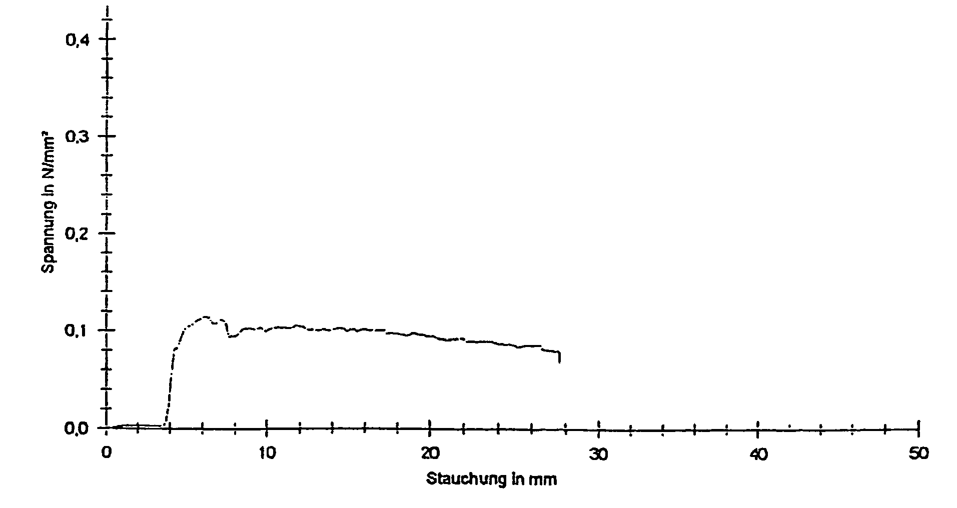

Die Rissspannung der Bauelemente kann beispielsweise über 0,04 N/mm² liegen, also beispielsweise im Bereich 0,04 N/mm² bis 0,05 N/mm² oder im Bereich 0,042 N/mm² bis 0,048 N/mm².

Die maximale Risskraft kann beispielsweise über 400 N liegen, also beispielsweise über 440 N oder beispielsweise im Bereich zwischen 440 bis 520 N oder im Bereich zwischen 450 bis 500 N.

Rissspannung und Risskraft können beispielsweise wie folgt bestimmt werden:

Ein durch das erfindungsgemäße Verfahren hergestellte Bauelement in Form eines Probewürfels von 100 mm x 100 mm x 100 mm Kantenlänge wird auf zwei gegenüberliegenden Flächen vollflächig auf Zugplatten aufgeklebt. Der Würfel wird durch die Zugplatten senkrecht zu den damit verbundenen Flächen auseinandergezogen mit einer Geschwindigkeit von 15 mm/min.

Die Bruchdehnung kann beispielsweise bei ε > 0,8 % liegen, also beispielsweise auch bei ε> 1 %, ε > 2 %, ε > 3%, ε > 4% oder ε > 5%.

Ein durch das erfindungsgemäße Verfahren hergestellte Bauelement lässt sich beispielsweise zur Erstellung eines Verbundelementes verwenden. Beispielsweise kann das Bauelement dazu auf einer oder beiden Oberflächen durch eine Druckbeanspruchung irreversibel verformt, also beispielsweise profiliert werden. Diese Oberflächenprofilierung des Bauelementes kann dem Oberflächenprofil einer Platte, beispielsweise einer Metall- oder Kunststoffplatte, entsprechen.

Indem eine Oberfläche des Bauelementes einer Oberfläche einer Platte angepasst worden ist, können Bauelement und Platte mit ihren aneinander angepassten Oberflächen aneinandergefügt werden, beispielsweise miteinander verklebt werden.

Das Bauelement kann ein- oder beidseitig entsprechend mit Platten verbunden werden.

Eine solches ein- oder beidseitig mit einer Platte, insbesondere mit einer Metallplatte, verbundenes Bauelement kann beispielsweise hervorragend als Bauelement zur Erstellung einer Dach- oder Wandkonstruktion verwendet werden.

Sämtliche der vorgenannten Merkmale des Bauelementes können beliebig miteinander kombiniert werden.

Weitere Merkmale der Erfindung ergeben sich aus den sonstigen Anmeldungsunterlagen, insbesondere auch den Figuren.

In der nachfolgenden Figurenbeschreibung soll ein Ausführungsbeispiel eines nach dem erfindungsgemäßen Verfahren hergestellten Bauelementes näher erläutert werden.

Dabei zeigt
- Fig. 1: ein Bauelement in seitlicher Ansicht;
- Fig. 2: das Bauelement nach Fig. 1, nachdem es irreversibel verformt worden ist und
- Fig. 3: das Bauelement nach Fig. 2, an dessen beide Oberflächen je eine Metallplatte angeklebt worden ist.

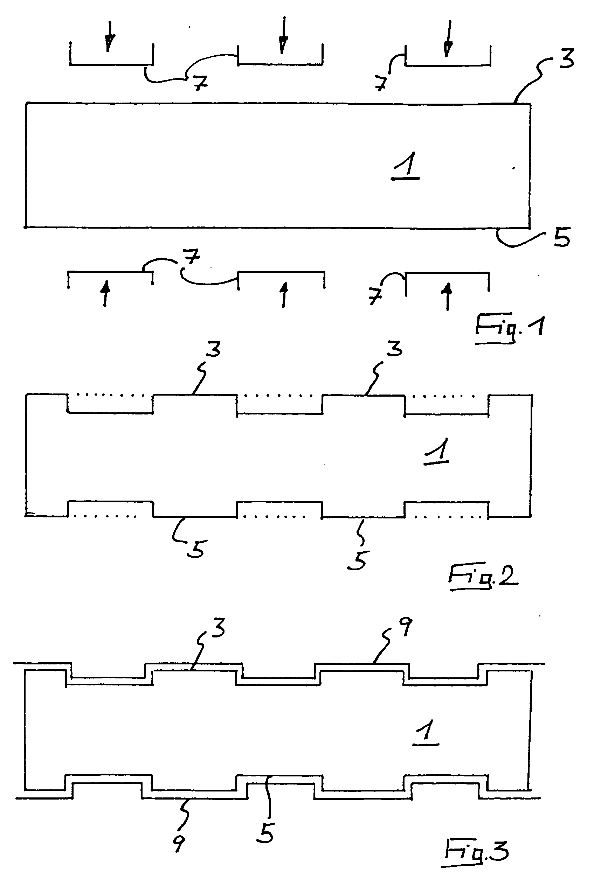

Fig. 1 zeigt ein quaderförmiges Bauelement 1, dessen obere Hauptoberfläche mit dem Bezugszeichen 3 und dessen untere Hauptoberfläche mit dem Bezugszeichen 5 gekennzeichnet ist in seitlicher Ansicht.

Auf die obere Hauptoberfläche 3 und die untere Hauptoberfläche 5 bewegen sich je drei Druckeinrichtungen 7 zu. Die Druckeinrichtungen weisen den entsprechenden Hauptoberflächen jeweils zugekehrte Druckflächen auf.

Sobald die Druckflächen auf den entsprechenden Hauptoberflächen 3, 5 aufliegen (nicht dargestellt) und der durch die Druckflächen auf die Hauptoberflächen 3, 5 ausgeübte Druck die Druckfestigkeit des Bauelementes 1 übersteigt, wird das Bauelement 1 an den durch die Druckflächen beanspruchten Stellen irreversibel verformt.

Die dadurch hervorgerufene Verformung des Bauelementes 1 ist in Fig. 2 dargestellt. Die gepunkteten Linien geben den Verlauf der Hauptoberflächen 3, 5 des Bauelementes 1 (gemäß Fig. 1) vor seiner Druckbeanspruchung wieder.

Das dadurch hervorgerufene Oberflächenstrukturierung ist dem Verlauf von Metallplatten angepasst, wie in Fig. 3 zu erkennen. Je eine Metallplatte 9 ist über eine zwischen den Hauptoberflächen 3, 5 des Bauelementes 1 und den Metallplatten angeordnete Kleberschicht mit dem Bauelement 1 verbunden.

Das gemäß Fig. 3 konfektionierte Bauelement zeichnet sich bei geringem Gewicht, hoher Festigkeit und geringer Wärmeleitfähigkeit hervorragend als Konstruktionselement zur Erstellung einer Decke oder Wand.

## Patentansprüche

1. Verfahren zur Herstellung eines porösen Bauelementes (1)auf Basis expandierter Perlite, das bei einer äußeren Druckbeanspruchung irreversibel verformbar ist, mit folgenden Schritten:
a) Herstellung zunächst eines Bindemittels, enthaltend Kieselsol und/oder Wasserglas, Verdicker und Hydrophobierungsmittel;
b) Vermischung des Bindemittels mit expandierter Perlite als Leichtzuschlag;
c) der mit dem Bindemittel vermischte Leichtzuschlag wird in eine Form gegeben und zu einem Rohling verpresst;
d) Aushärten lassen des Bindemittel-Leichtzuschlag-Gemisches zu einem Formkörper;
e) Trocknung des Formkörpers in einem Trockner auf eine Restfeuchte zwischen 5 und 20 Gew.-% zum fertigen Bauelement.

## Claims

1. A method of manufacturing a porous building element (1) based on expanded perlite, which is irreversibly deformable with an external application of pressure, having the following steps:
a) production initially of a binding agent containing silica sol and/or water glass, thickener and hydrophobing agent;
b) mixing of the binding agent with expanded perlite as a lightweight aggregate;
c) the lightweight aggregate which is mixed with the binding agent is introduced into a mould and pressed to form a blank;
d) the mixture of binding agent/ lightweight aggregate is left to harden to form a shaped body;
e) drying of the shaped body in a drier to a residual moisture of between 5 and 20 mass-% to form the finished building element.

## Revendications

1. Procédé de fabrication d'un élément de construction poreux (1), sur la base de perlite expansée, qui lors d'une contrainte en pression extérieure est déformable de façon irréversible, avec les étapes suivantes :
a) fabrication, d'abord d'un agent liant, contenant du dioxyde de silicium (Kieselsol) et/ou du silicate de potassium, un agent épaississant et un agent d'imperméabilisation ;
b) mélange de l'agent liant avec de la perlite expansée, en tant que granulats légers ;
c) les granulats légers mélangés à l'agent liant sont versés dans un moule et comprimés en une ébauche ;
d) solidification du mélange agent liant/granulats légers en un corps moulé ;
e) séchage du corps moulé dans un séchoir à une humidité résiduelle comprise entre 5 et 20 % en poids, pour obtenir l'élément de construction fini.
